(19) Europäisches Patentamt European Patent Office Office européen des brevets

(11) **EP 3 462 169 B1**

(12) **EUROPEAN PATENT SPECIFICATION**

(45) Date of publication and mention of the grant of the patent:
**22.12.2021 Bulletin 2021/51**

(51) Int Cl.:
**G01N 27/447** *(2006.01)*  **B01D 57/02** *(2006.01)*

(21) Application number: **18197978.2**

(22) Date of filing: **01.10.2018**

(54) **SEPARATION MEDIUM FOR ELETROPHORESIS, REAGENT KIT FOR ELETROPHORESIS, AND ELETROPHORESIS METHOD**

TRENNMEDIUM FÜR ELEKTROPHORESE, REAGENZIENKIT FÜR ELEKTROPHORESE UND ELEKTROPHORESEVERFAHREN

MILIEU DE SÉPARATION POUR ÉLECTROPHORÈSE, KIT DE RÉACTIF POUR ÉLECTROPHORÈSE ET PROCÉDÉ D'ÉLECTROPHORÈSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2017 JP 2017192887**

(43) Date of publication of application:
**03.04.2019 Bulletin 2019/14**

(73) Proprietor: **Shimadzu Corporation Kyoto 604-8511 (JP)**

(72) Inventor: **ARAI, Akihiro Kyoto-shi, Kyoto 6048511 (JP)**

(74) Representative: **Mewburn Ellis LLP Aurora Building Counterslip Bristol BS1 6BX (GB)**

(56) References cited:
**US-A1- 2010 187 113    US-A1- 2013 001 084**

- **PERLMAN D ET AL: "Improved resolution of DNA fragments in polysaccharide-supplemented agarose gels", ANALYTICAL BIOCHEMISTRY, ELSEVIER, AMSTERDAM, NL, vol. 163, no. 1, 15 May 1987 (1987-05-15), pages 247-254, XP024822686, ISSN: 0003-2697, DOI: 10.1016/0003-2697(87)90120-5 [retrieved on 1987-05-15]**
- **IVAN MIKSÍK ET AL: "Matrices for capillary gel electrophoresis-a brief overview of uncommon gels", BIOMEDICAL CHROMATOGRAPHY., vol. 20, no. 6-7, 1 January 2006 (2006-01-01), pages 458-465, XP055554963, GB ISSN: 0269-3879, DOI: 10.1002/bmc.640**
- **CHANKVETADZE B ET AL: "Enantioseparation using selected polysaccharides as chiral buffer additives in capillary electrophoresis", JOURNAL OF CHROMATOGRAPHY A, ELSEVIER, AMSTERDAM, NL, vol. 773, no. 1-2, 27 June 1997 (1997-06-27), pages 331-338, XP004125523, ISSN: 0021-9673, DOI: 10.1016/S0021-9673(97)00263-X**

## Description

BACKGROUND

Technical Field

The present invention relates to a separation medium for electrophoresis, a reagent kit for electrophoresis, and an electrophoresis method.

Related Art

In a method of conducting an electrophoresis in a capillary, such as a microchip electrophoresis method, a capillary electrophoresis method and the like, it is common that a water-soluble polymer solution is used as a separation medium for nucleic acid (for example, DNA, RNA), protein and the like. The water-soluble polymer solution is selected so as to meet the requirements of a filling in a flow path, an easy substitution, a separation performance and a rapid separation. For example, when a short-chain DNA is electrophoresed, a water-soluble polymer solution having a relatively low molecular weight and a high concentration is used. Besides, examples are reported that for purpose of expanding a size range of separation and promoting an adsorption to the surface of the flow path, a copolymer such as a random copolymer (for example, poly(acrylamide-co-dimethyl acrylamide)), a block copolymer (for example, poly(ethylene oxide)-poly(propylene oxide)) and a graft polymer (for example, poly(N-isopropyl acrylamide)-graft-polyethylene oxide), or a mixed polymer obtained by mixing heterogeneous or homogeneous polymers is used (Japanese Laid-open No. 2014-055829 (patent literature 1) and so on). Patent literature 2 discloses a separation medium for electrophoresis in bare channels with suppressed electroosmotic flow, wherein various forms of boric acid are adsorbed on the wall of the separation channel.
Patent literature 3 describes a method for size separation of proteins by capillary electrophoresis with cationic surfactant. Non-patent literature 1 describes the use of agarose gels comprising hydroxyethylcellulose having improved optical clarity.
Non-patent literature 2 describes the use of uncommon gels for capillary gel electrophoresis, including pullulan.

[Patent literature 1] Japanese Laid-open No. 2014-055829
[Patent literature 2] US 2013/0001084
[Patent literature 3] US Publication No. 2010/0187113

[Non-patent literature 1] Perlman, D. et al. Analytical Biochemistry, 163, 247-254 (1987)
[Non-patent literature 2] Miksík, I. et al. Biomedical Chromatography, 20, 458-465 (2006)

SUMMARY

[Problems to be Solved]

Meanwhile, in recent years, a genome editing technology for changing any base sequence has proceeded rapidly. Presence or absence of a mutation in the target base sequence is confirmed in the genome editing technology, but the means takes time and costs to confirm an insertion mutation or a deletion mutation of a few bases by a DNA sequencing every time, and thus the means should be improved. As an alternative technology of such DNA sequencing, a microchip electrophoresis method that can simply and inexpensively conduct a screening is used. For example, the screening method using the microchip electrophoresis method is conducted as follows. Firstly, a genome DNA containing a target base sequence is used as a template, and a DNA product containing the target base sequence is amplified by a polymerase chain reaction (PCR). Here, when the genome DNA in which a wild-type sequence and a mutant-type sequence are mixed in the target base sequence is used as a template, a double-stranded DNA product (a heteroduplex DNA) containing a partial mismatch is obtained by PCR. The heteroduplex DNA is different in mobility in the electrophoresis compared with the double-stranded DNA product (a homoduplex DNA) of the sequences which maintain a complementation. Therefore, the DNA product containing the target base sequence can be screened using the mobility in the electrophoresis as an index.
However, even if the screening method using the microchip electrophoresis method is used, it is limited to detect differences of 2-8 bp in 100 bp of the double-stranded DNA product obtained by PCR, and a separation performance in a short-chain area (for example, 25-250 bp) should be further improved. In order to improve the separation performance of the double-stranded DNA product in the short-chain area, a method is conventionally known which uses a relatively low-molecular-weight water-soluble polymer as a separation medium at a high concentration. However, there is a problem in this method that the viscosity of the separation medium increases, so that a device is separately required to apply a sufficient pressure to the flow path in the refilling and substitution of the separation medium when the microchip is used repeatedly, and the electrophoresis device becomes large.

The present invention is accomplished based on the above problem, and provides a separation medium for electrophoresis having an improved separation performance without increasing a viscosity.

[Means to Solve the Problems]

After conducting an intensive study, the present inventor finds that by adding a sugar alcohol derived from monosaccharide or disaccharide or a low-molecular-weight polysaccharide to a separation medium for electrophoresis including a water-soluble cellulose derivative, the separation performance in an electrophoresis is improved without increasing viscosity, and thus accomplishes the present disclosure.

The present invention provides a separation medium for electrophoresis within a surface-coated flow path, the separation medium including: hydroxypropylmethyl cellulose; and

a sugar alcohol derived from monosaccharide or disaccharide, or a low-molecular-weight polysaccharide with a molecular weight of 80000 or less.

According to an embodiment of the invention, in the separation medium for electrophoresis, the sugar alcohol is selected from mannitol, erythritol, xylitol, lactitol, maltitol, sorbitol, or a combination thereof.

According to an embodiment of the invention, the concentration of the sugar alcohol in the separation medium is 1-5% (w/v).

According to an embodiment of the invention, in the separation medium for electrophoresis, a weight-average molecular weight of the polysaccharide is 10000-80000.

According to an embodiment of the invention, in the separation medium for electrophoresis, the polysaccharide includes: pullulan, agarose, dextran, dextrin, amylose, xanthan gum, mannan, galactomannan, gellan gum, carrageenan, curdlan, pectine, welan gum, alginic acid, alginic acid salt, alginic acid ester, karaya gum, tamarind seed gum, rhamsan gum, or a combination thereof.

According to an embodiment of the invention, the concentration of the polysaccharide in the separation medium is 0.2-5 wt%.

According to an embodiment of the invention, in the separation medium for electrophoresis, the sugar alcohol or the polysaccharide includes mannitol, pullulan, or a combination thereof.

In another aspect, the present invention provides a reagent kit for electrophoresis including the above separation medium for electrophoresis.

In another aspect, the present invention provides an electrophoresis method which is an electrophoresis method of an object substance in a sample, including:

(A) a process for introducing the sample to a flow path filled with the above separation medium for electrophoresis; and
(B) a process for applying a voltage to the flow path to conduct an electrophoresis and separate the object substance in the sample.

According to an embodiment of the invention, in the electrophoresis method, the object substance includes nucleic acid (for example, DNA, RNA) or protein.

[Effect]

According to the present invention, a separation medium for electrophoresis having an improved separation performance without increasing a viscosity can be provided.

BRIEF DESCRIPTION OF THE DRAWINGS

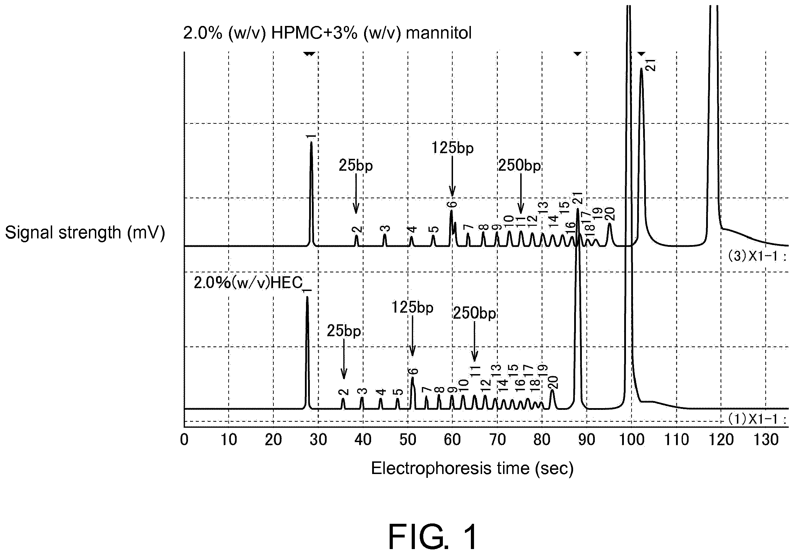

FIG. 1 is an electropherogram which compares the separation performances of a separation medium for electrophoresis in the present embodiment and a conventional separation medium for electrophoresis. The number notated at the vertex of a peak is the number of each peak assigned according to a detection order, and the same number represents the same DNA fragment.

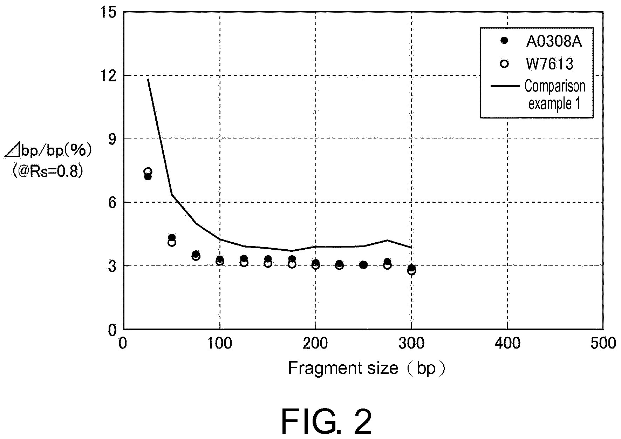

FIG. 2 is a graph showing a correlation between a size (bp) of a DNA product and a size resolution (%).

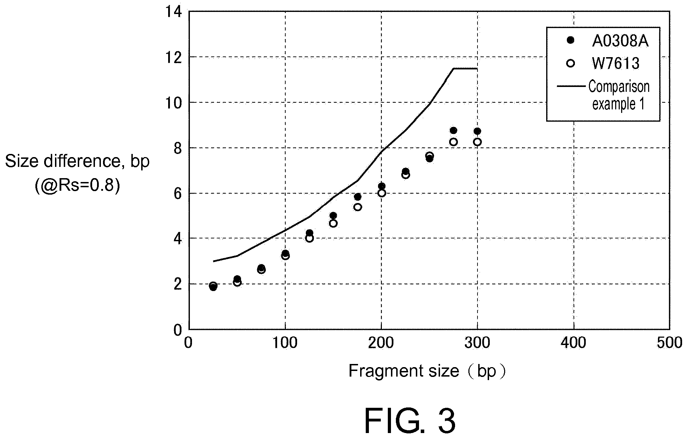

FIG. 3 is a graph showing a correlation between the size (bp) of the DNA product and a separable size difference (bp).

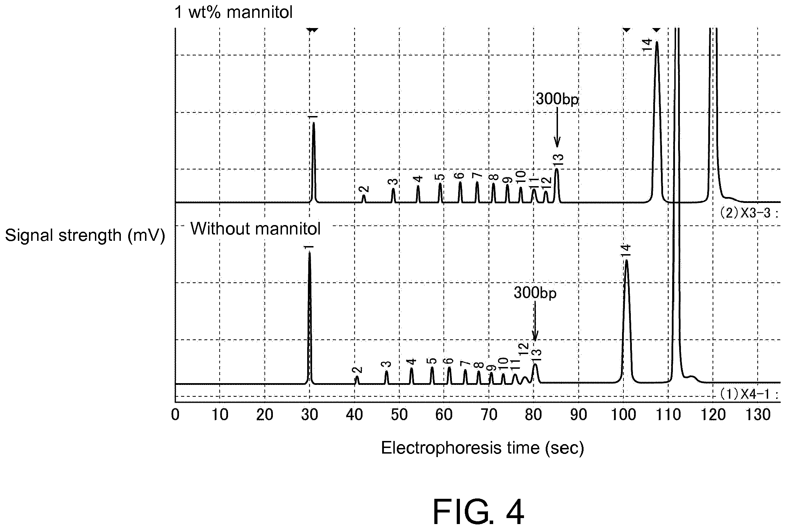

FIG. 4 is an electropherogram which compares the separation performances of a separation medium for electrophoresis in which mannitol is added to a water-soluble cellulose derivative, and a separation medium for electrophoresis in which mannitol is not added to a water-soluble cellulose derivative. The number notated at the vertex of a peak is the number of each peak assigned according to the detection order, and the same number represents the same DNA fragment.

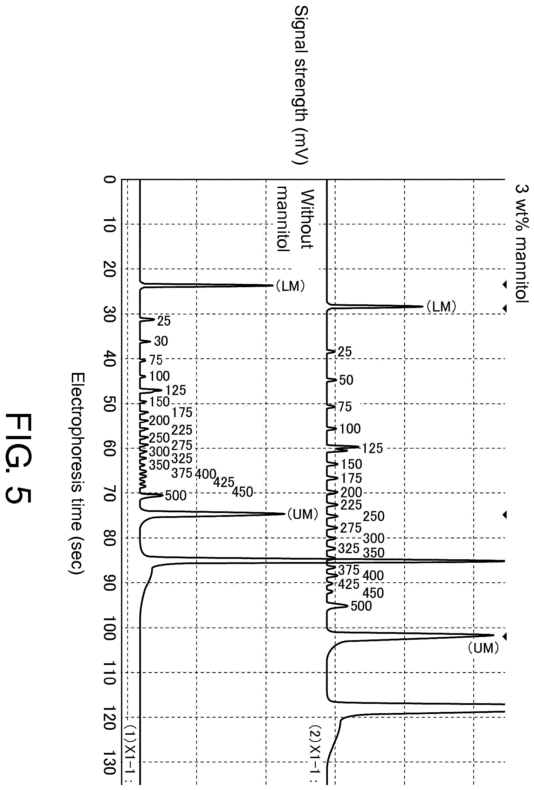

FIG. 5 is an electropherogram which compares the separation performances of the separation medium for electrophoresis in which mannitol is added to the water-soluble cellulose derivative, and the separation medium for electrophoresis in which mannitol is not added the water-soluble cellulose derivative. The number notated at the vertex of a peak represents the size (bp) of a DNA fragment corresponding to each peak. Besides, notations of (L M) and (UM) respectively represent a low-molecular-weight internal standard marker and a high-molecular-weight internal standard marker.

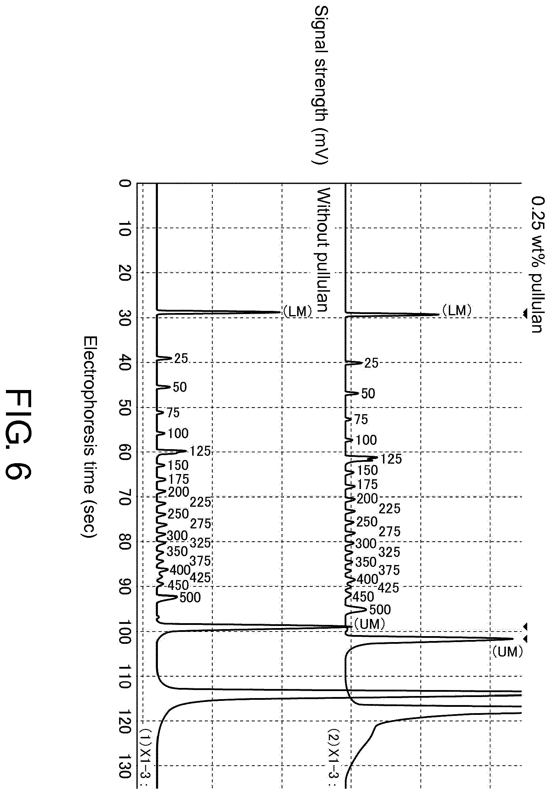

FIG. 6 is an electropherogram which compares the separation performances of a separation medium for electrophoresis in which pullulan is added to a water-soluble cellulose derivative, and a separation medium for electrophoresis in which pullulan is not added to a water-soluble cellulose derivative. The number notated at the vertex of a peak represents the size (bp) of the DNA fragment corresponding to each peak. Besides, notations of (LM) and (UM) respectively represent the low-molecular-weight internal standard marker and the high-molecular-weight internal standard marker.

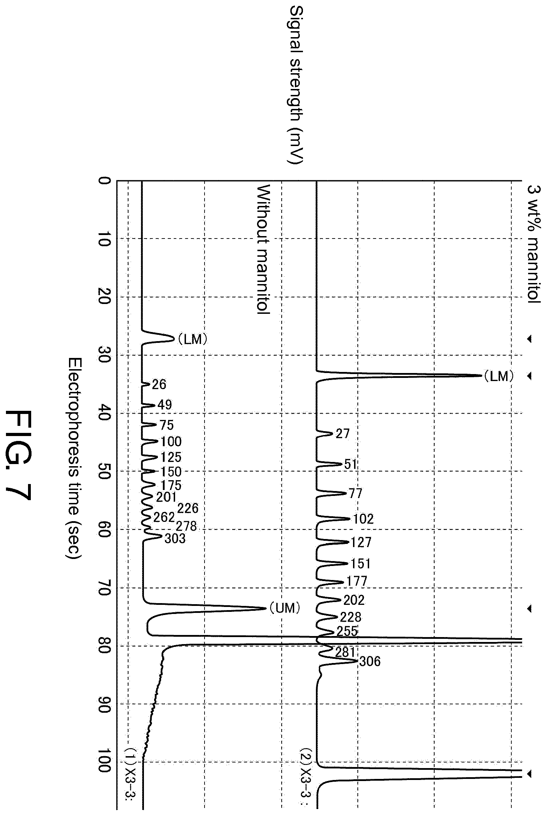

FIG. 7 is an electropherogram which compares the separation performances of the separation medium for electrophoresis in which mannitol is added to the water-soluble cellulose derivative, and the separation medium for electrophoresis in which mannitol is not added to the water-soluble cellulose derivative. The number notated at the vertex of the peak represents the size (bp) of the DNA fragment corresponding to each peak. Besides, notations of (LM) and (UM) respectively represent the low-molecular-weight internal standard marker and the high-molecular-weight internal standard marker.

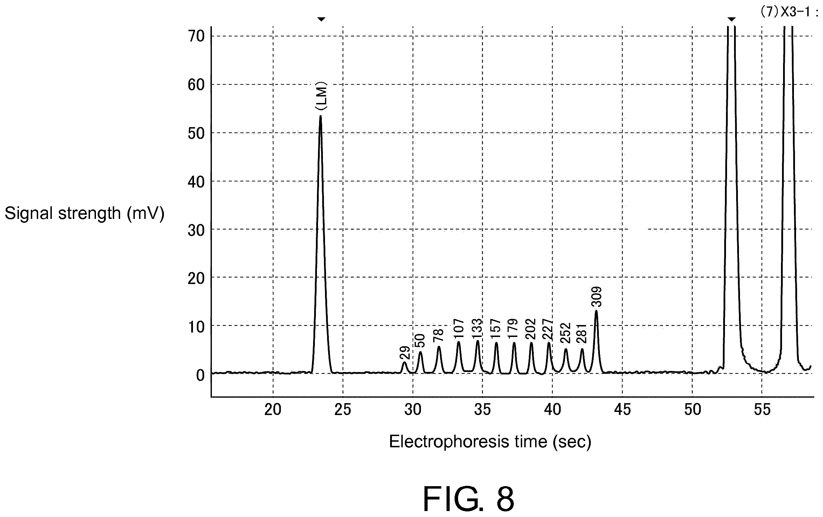

FIG. 8 is an electropherogram showing the separation performance in a case of using a separation medium for electrophoresis containing HPMC with a large weight-average molecular weight. The number notated at the vertex of the peak represents the size (bp) of the DNA fragment corresponding to each peak. Besides, the notation of (LM) represents the low-molecular-weight internal standard marker.

DESCRIPTION OF THE EMBODIMENTS

Besides, a notation of "A-B" refers to an upper and lower limit of a range (that is, more than A and less than B); when a unit is only mentioned in B without being mentioned in A, the units of A and B are the same.

(Separation medium for electrophoresis)

The separation medium for electrophoresis of the present invention (it may be only referred to as the "separation medium for electrophoresis" hereinafter) includes hydroxypropylmethyl cellulose, and a sugar alcohol derived from monosaccharide or disaccharide or a low-molecular-weight polysaccharide. By having such a structure, the separation medium for electrophoresis can improve the separation performance without increasing the viscosity. Here, the "separation performance" refers to a performance that can separate and detect object substances corresponding to two adjacent peaks, to a degree that the two adjacent peaks can be respectively identified as separate peaks, in an electropherogram obtained by an electrophoresis. The separation performance of the separation medium for electrophoresis can be assessed according to a size resolution, a degree of separation, a separable size difference and the like described below.

The "separation medium for electrophoresis" refers to a medium which is capable of introducing a sample, and which electrophoreses and separates the sample.

The "water-soluble cellulose derivative" as disclosed herein refers to a cellulose derivative which converts at least one hydroxyl group (-OH) in a repeating unit of cellulose to an ether (-OR) and improves a water solubility. Here, the "water solubility" refers to a solubility of more than 1 g in 100 g of distilled water in 25°C, 1 air pressure.

The water-soluble cellulose derivative of the present invention is hydroxypropyl methy cellulose.

The weight-average molecular weight ($M_w$) of the water-soluble cellulose derivative is preferably 50000-2000000, more preferably 250000-1300000, and further preferably 300000-370000. When the weight-average molecular weight is in this range, the conditions may be easily found which can further meet the separation performance without increasing the viscosity of the separation medium for electrophoresis as much as possible, together with the optimization of the concentration. The weight-average molecular weight can be measured by a light scattering method or a gel permeation chromatography (GPC).

A number-average molecular weight ($M_n$) of the water-soluble cellulose derivative is preferably 20000-500000, and more preferably 80000-160000. The number-average molecular weight can be measured by the light scattering method or the gel permeation chromatography (GPC).

A polydispersity ($M_w/M_n$) of the water-soluble cellulose derivative may be 1.0-100.0, 2.0-20.0, or 3.0-4.0. The polydispersity can be calculated by dividing the weight-average molecular weight with the number-average molecular weight.

The viscosity of the water-soluble cellulose derivative (concentration of 2 wt%, temperature of 25°C) is preferably 50-4000 cP, and more preferably 50-100 cP. When the viscosity is in this range, the filling and the substitution of the separation medium for electrophoresis in the flow path of the electrophoresis become easier. The viscosity can be measured by Brookfield viscometer.

The concentration of the water-soluble cellulose derivative in the separation medium for electrophoresis may be 0.2-2.0% (w/v) or 0.5-1.6% (w/v).

The water-soluble cellulose derivative may be produced by a known method. Besides, the water-soluble cellulose derivative may be a commercial product directly used without refinement, or a commercial product used after refinement. When HPMC is used as the water-soluble cellulose derivative, the commercial products include, for example, HPMC made by Sigma-Aldrich Japan Co., Ltd, which is used in a practical example described below.

The "sugar alcohol" refers to a chain polyhydric alcohol in which a carbonyl group of the sugar is reduced. The "sugar alcohol derived from monosaccharide or disaccharide" refers to a sugar alcohol obtained by reducing monosaccharide or disaccharide. In the embodiment, the sugar alcohol includes, for example, mannitol, erythritol, xylitol, lactitol, maltitol and sorbitol, and one of these may be selected to be used or multiple of these may be combined to be used. Furthermore, when optical isomers (D-isomer and L-isomer) exist in the sugar alcohol, any one of the optical isomers may be used or a mixture of the two may be used. Preferably, the sugar alcohol includes mannitol.

The concentration of the sugar alcohol in the separation medium for electrophoresis is preferably 1-5 wt% and more preferably 1-3 wt%. When the concentration is in this range, the separation performance of the separation medium for electrophoresis can be further improved.

The "polysaccharide" refers to a high molecular compound obtained by the polyglycosylation of monosaccharide. In the embodiment, the "low-molecular-weight polysaccharide" refers to a polysaccharide with a low molecular weight so that the polysaccharide itself does not function as a separation medium for DNA and other object substances, and may be, for example, a polysaccharide with a weight-average molecular weight described below. The polysaccharide includes, for example, pullulan, agarose, dextran, dextrin, amylose, xanthan gum, mannan, galactomannan, gellan gum, carrageenan, curdlan, pectine, welan gum, alginic acid, alginic acid salt (for example, sodium alginate, potassium alginate, calcium alginate, ammonium alginate and the like), alginic acid ester (for example, propylene glycol alginate and the like), karaya gum, tamarind seed gum, rhamsan gum and the like; one of these may be selected to be used, or multiple of these may be combined to be used. Preferably, the polysaccharide includes pullulan.

The weight-average molecular weight ($M_w$) of the polysaccharide is preferably 10000-80000, more preferably 20000-80000, and further preferably 22800-80000. By appropriately using the polysaccharide with a weight-average molecular weight in the above range, a thickening effect can be reduced as much as possible. The weight-average molecular weight can be measured by the gel permeation chromatography (GPC).

The concentration of the polysaccharide in the separation medium for electrophoresis is preferably 0.2-5 wt%, and more preferably 0.25-1.0 wt%. When the concentration of the polysaccharide is in this range, the separation performance of the separation medium for electrophoresis can be further improved.

Preferably, the sugar alcohol or the polysaccharide contains mannitol, pullulan, or a combination thereof.

The separation medium for electrophoresis is usually a liquid, preferably an aqueous solution, and more preferably an aqueous solution having a buffer capacity (also referred to as a "buffer solution" hereinafter). Here, the "buffer capacity" refers to a buffer action on the concentration of hydrogen ions in the solution. The buffer solution includes TBE buffer solution (89 mM of Tris, 89 mM of boric acid, 2 mM of EDTA-Na2, pH8.3), TAE buffer solution (40 mM of tris hydroxymethyl aminomethane (Tris), acetic acid, 1 mM of ethylenediaminetetraacetic acid disodium salt (EDTA-Na2), pH8.3) and the like. Besides, there is an occasion that the ionic strength of these buffer solutions is changed to be used. For example, 2×TBE buffer solution (178 mM of tris hydroxymethyl aminomethane (Tris), 178 mM of boric acid, 4 mM of ethylenediaminetetraacetic acid disodium salt (EDTA-Na2), pH8.3) and the like are used.

The viscosity of the separation medium for electrophoresis (temperature of 25°C) is preferably 10-200 cP, and more preferably 20-100 cP. When the viscosity is in this range, the filling and the substitution of the separation medium for electrophoresis in the flow path of the electrophoresis become easier. The viscosity can be measured by Brookfield viscometer.

The separation medium for electrophoresis may include, in the scope of not impairing an effect of the embodiment, a DNA staining reagent (for example, product of Thermo Fisher Scientific Inc., brand name: SYBR (registered trademark) Gold), product of Rockland, Inc., brand name: Gel Star (registered trademark) and other components.

In a case of using a nucleic acid (for example, DNA or RNA) as the electrophoretic object substance, in the separation medium for electrophoresis of the embodiment, the size resolution (%) in the size area of 100-300 bp is preferably less than 3%. Here, the size resolution (%) refers to a ratio of a separable minimum size difference (bp) with respect to the size (bp) of the electrophoretic DNA fragment. A smaller size resolution means that two DNA fragments with a small size difference can be distinguished more accurately and the separation performance is excellent. The separation medium for electrophoresis with such a size resolution is suitable for the electrophoresis which confirms a mutation introduction caused by a genome editing. The size resolution can be calculated from the electropherogram obtained by the electrophoresis. Specifically, the size resolution focuses on two close peaks (referred to as "a first peak" and "a second peak") in the electropherogram, and can be obtained from the following formula. Here, the size of the first peak (bp) is set smaller than the size of the second peak (bp).

$$\text{Size resolution (\%)}=(\text{size separation performance [bp]/size of the first peak [bp]})$$

(wherein, size separation performance [bp]=(size difference [bp] of two close peaks)/$R_s$)

Here, $R_s$ refers to a degree of separation when assuming that the widths and heights of the two close peaks are about the same. When $R_s$ is larger than a specified reference value, it is judged that the two close peaks are separated. For example, in a case of $R_s \geq 0.8$, it may be judged that the two close peaks are sufficiently separated. $R_s$ is calculated by the following formula.

[Formula 1]

$$R_s = 2 \times \frac{t_2 - t_1}{w_{b,1} + w_{b,2}}$$

or

$$R_s = \frac{t_2 - t_1}{4\sigma} = \frac{t_2 - t_1}{4 \times \dfrac{W_h}{\sqrt{8 \ln 2}}} = 0.589 \frac{t_2 - t_1}{W_h}$$

In the formula, t refers to an electrophoresis time, $w_b$ refers to a peak width in a base line, $4\sigma$ refers to a peak width in a base line when the peak is in a Gaussian distribution, and $W_h$ refers to a peak width in the 1/2 peak height. Inferior figures in t and $w_b$ refer to the numbers of the corresponding peaks. However, $4\sigma$ is used in a state that the expansion of the peak in the electrophoresis flow path can be assumed to be denoted by a formula of dispersion $\sigma^2 = 2Dt$ (D is a diffusion coefficient) and the peak expansion due to factors other than a diffusion (for example, an adsorption of the sample component to an inner wall of the flow path) can be ignored. For example, ti refers to an electrophoresis time of the first peak, and $t_2$ refers to an electrophoresis time of the second peak.

In a case of using DNA or RNA as the electrophoretic object substance, in the separation medium for electrophoresis of the embodiment, the separable size difference in the size area of 25-100 bp is preferably 1-5 bp, and more preferably 1-3 bp. The separation medium for electrophoresis with such a separable size difference is suitable for the electrophoresis which confirms the mutation introduction caused by the genome editing. The separable size difference refers to a difference of the fragment size (the length of the chain) in two peaks, which is necessary for $R_s=0.8$. A smaller separable size difference means that two DNA fragments having a small size difference can be separated more accurately and the separation performance is excellent. The separable size difference can be calculated from the electropherogram obtained by the electrophoresis.

The separation medium for electrophoresis of the embodiment includes the water-soluble cellulose derivative, and the sugar alcohol or the relatively low-molecular-weight polysaccharide. By having such a structure, the separation medium for electrophoresis can improve the separation performance without increasing the viscosity significantly. A method is conventionally known which uses a relatively low-molecular-weight water-soluble polymer as a separation medium at a high concentration in order to improve the separation performance of a double-stranded DNA product in a short-chain area (for example, 25-250 bp). However, there is a problem in this method that the viscosity of the separation medium increases, so that a device is separately required to apply a sufficient pressure in the refilling and substitution of the separation medium when the microchip is used repeatedly, and the electrophoresis device becomes large. According to the invention the separation medium for electrophoresis adds a low-molecular-weight sugar alcohol or a polysaccharide with a molecular weight of 80000 or less, which does not function by itself as a separation medium for DNA and other object substances, to the water-soluble cellulose derivative which is a water-soluble polymer, and thus the separation performance can be improved without increasing the viscosity significantly.

HPMC, which is used in the separation medium of the present invention, contains a plurality of hydroxyl groups, hydroxypropyl groups and the like oollulooo,and can form a hydrogen bond with the sugar alcohol or the polysaccharide. Therefore, instead of crosslinking on a molecular structure in a single component, the cellulose derivative molecules on a straight chain interact with each other due to the intervention of the sugar alcohol or the polysaccharide, and a network structure which impacts a sieving effect is changed. Furthermore, the hydroxyl groups, the hydroxypropyl groups and the like of the cellulose can also form hydrogen bonds with DNA. Therefore, the electrophoretic DNA product in the separation medium for electrophoresis of the embodiment is impacted by the pure separation caused by size and an affinity caused by the hydrogen bond, so that a separation selectivity is changed. As a result, it is considered by the inventors that due to the difference of the base sequences and the presence or absence of slight mutation even if the DNA size is the same in the short chain area, a difference is generated on the mobility in the electrophoresis. When such a mechanism is considered, the sugar alcohol and the polysaccharide used in the embodiment have the same technical characteristic of being capable of forming a hydrogen bond to the water-soluble cellulose derivative.

(Reagent kit for electrophoresis)

The reagent kit for electrophoresis of the embodiment (also referred to as "the reagent kit" hereinafter) includes the separation medium for electrophoresis of the present invention. The reagent kit may include the buffer solution, the DNA staining reagent, the molecular weight marker, the internal standard marker, a container, an instruction manual and the like.

(Electrophoresis method)

The electrophoresis method of the present invention is an electrophoresis method of the object substance in the sample and includes:

(A) a process for introducing the sample to a flow path filled with a separation medium for electrophoresis of the present invention, and

(B) a process for applying a voltage to the flow path to conduct an electrophoresis and separate the object substance in the sample.

Process (A): a process for introducing the sample to the flow path filled with the separation medium for electrophoresis

The "flow path filled with a separation medium for electrophoresis" in process (A) refers to a flow path which allows the object substance in the sample to move by the electrophoresis, and which is filled with the separation medium for electrophoresis of the embodiment. The length of the flow path is not particularly limited and may be, for example, 10-40 mm. The size of the flow path (for example, the internal diameter of a capillary tube which is a flow path, the width of a flow path arranged on the microchip, and the like) is not particularly limited and may be, for example, 20-100 $\mu$m.

The flow path may be the capillary tube or the micro flow path arranged on the microchip. When the capillary tube or the micro flow path arranged on the microchip is configured by glass, the surface of the flow path may be coated (for example, polyacrylamide coating) in order to suppress an electro-osmotic flow, or to inhibit the adsorption of contaminants in the sample. The polyacrylamide coating is performed on the surface of the flow path in the following way for example. Firstly, a silane coupling agent containing a methacrylic group is made to act on the surface of the micro flow path and the methacrylic group is introduced to the surface. Next, an acrylamide monomer is made to act on the methacrylic group and a polymerization reaction is promoted in a predetermined condition, so that the polyacrylamide coating is conducted on the surface of the micro flow path.

The sample introduced to the flow path is not particularly limited, but is preferably a solution; for example, the sample may be a TE buffer solution (10 mM of Tris-HCl, 1 mM of EDTA-Na2, pH8.0) in which DNA is dissolved. The sample may include the internal standard marker. The internal standard marker includes, for example, an internal standard marker in DNA-500 reagent kit for brand name MCE (registered trademark)-202 MultiNA (registered trademark) made by Shimadzu Corporation.

The object substance in the sample is not particularly limited as long as the object substance is an ionized substance, but preferably includes nucleic acid (for example, DNA, RNA) or protein, and more preferably includes DNA. The DNA may be a double-stranded DNA (for example, a heteroduplex DNA, a homoduplex DNA and the like) or a single-stranded DNA.

The sample may be introduced to any position of the flow path, but from the standpoint of ensuring an adequate electrophoresis distance, the sample is preferably introduced to one end side of the flow path.

Process (B): a process for applying a voltage to the flow path to conduct an electrophoresis and separate the object substance in the sample

The voltage in process (B) may be applied to the whole or a part of the flow path. From the standpoint of ensuring adequate electrophoresis distance, the voltage is preferably applied between two ends of the flow path. The applied voltage can be appropriately determined according to the length and size of the electrophoresis flow path, and the type of the sample and object substance. The applied voltage is, for example, 0.2-10 kV.

The electrophoresis method may further include a process (C) for detecting the separated object substance. Process (C) may include a detection of the separated object substance by an optical technique. The detection using the optical technique is, for example, a measurement of absorbance or fluorescence. The wavelength used in the detection can be appropriately determined according to the type of the sample and object substance.

The electrophoresis method of the embodiment may be automatically conducted, for example, by a microchip electrophoresis device from process (A) to process (C). The microchip electrophoresis device may be, for example, MCE (registered trademark)-202 MultiNA (registered trademark) (brand name) made by Shimadzu Corporation. Specifically, firstly, the microchip (for example, brand name Type WE made by Shimadzu Corporation), the separation medium for electrophoresis, the sample, and the internal standard marker are set on the microchip electrophoresis device. After that, the pressure for filling the separation medium for electrophoresis (100-500 kPa) and the voltage applied to the two ends of the flow path arranged on the microchip (0.2-1.4 kV) are changed as necessary, and the electrophoresis is conducted automatically.

The electrophoresis method of the embodiment is suitable for an electrophoresis which confirms the mutation introduction caused by the genome editing, particularly for a separation of the heteroduplex DNA product.

[Practical Example]

In the following, the disclosure is described in more detail by showing practical examples, but the disclosure is not limited by these practical examples.

(Preparation of separation medium for electrophoresis)

1. Preparation of TBE buffer solution containing HPMC

As for the hydroxypropylmethyl cellulose (HPMC), the commercial product (made by Sigma-Aldrich Co. LLC) is used directly without refinement. The number-average molecular weight ($M_n$), the weight-average molecular weight ($M_w$), and the polydispersity ($M_w/M_n$) of each HPMC are measured by the gel permeation chromatography (GPC). Specifically, a standard sample with a known molecular weight (a molecular weight of 504-1800000) is used to conduct a GPC analysis, and a calibration curve is created from an elution time. The sample (a concentration of 0.4% (w/v)) containing each HPMC which is a measured object is used to conduct the GPC analysis in the same analysis condition as the case of the standard sample, and $M_n$, $M_w$ and $M_w/M_n$ are calculated based on the calibration curve.

Analysis condition of GPC

Column: Shodex OHpak SB-806M HQ, guard column Shodex OHpak SB-G

Mobile phase: 0.1 mol/L sodium nitrate

Flow rate: 1.0 mL/min

Temperature: 40 °C

Detector: refractive index detector, made by Shimadzu Corporation, RID-20A (brand name)

The viscosity of each HPMC is measured by Brookfield viscometer. Specifically, the viscosity is measured in the following order. Firstly, a viscometer standard solution of NIST compliance (100 mPa·s) is used to verify a validity of the measurement method, and the viscosity of the sample (a concentration of 2.0% (w/v)) containing HPMC which is a measured object is measured in the same condition.

**EP 3 462 169 B1**

Viscosity measuring condition

Viscometer : Brookfield DV-II+Pro

Spindle : CPA-40Z

Temperature : 25°C

A list of the HPMC used is shown in Table 1.

[Table 1]

Table 1

| # | Brand name | Number-average molecular weight (Mn) | Weight-average molecular weight (Mw) | Polydispersity ($M_w/M_n$) | Viscosity (cP) 2 wt%, 25°C |
|---|---|---|---|---|---|
| 1 | Hydroxypropyl methylcellulose, 50 cP | 88070 | 314800 | 3.57 | 56.9 |
| 2 | Hydroxypropyl methylcellulose, 100 cP | 117180 | 365840 | 3.12 | 98.2 |
| 3 | Hydroxypropyl methylcellulose, 4000 cP | 300290 | 1023060 | 3.41 | 4000* |
| *Viscosity measuring condition: Brookfield DV-II+Pro Viscometer, spindle: CPA-40Z | | | | | |

After that, each HPMC is completely dissolved in the 2×TBE buffer solution (178 mM of Tris, 178 mM of boric acid, 4 mM of EDTA-Na2, pH8.3) so that the concentration reaches 2% (w/v), and a TBE buffer solution containing HPMC is obtained. The TBE buffer solution containing HPMC is kept not to exceed a lower critical solution temperature (45°C) until it is used. Besides, when HPMC in the buffer solution does not dissolve due to a heat load, the HPMC is re-dissolved by cooling.

2. Preparation of separation medium for electrophoresis

In the TBE buffer solution containing the prepared HPMC, SYBR (registered trademark) Gold (made by Thermo Fisher Scientific Inc., brand name) which is a DNA staining reagent is dissolved in the way of 1/10000 concentration (or × 10,000 fold dilution); furthermore, mannitol or pullulan is dissolved to the concentration described below and sufficiently mixed, thereby obtaining the separation medium for electrophoresis.

(Preparation of sample for electrophoresis)

A DNA size marker which is an object substance (25 bp DNA ladder made by Invitrogen Corporation, or 25 bp DNA step ladder made by Promega Corporation) is diluted to 7.2-20 ng/μL by a TE buffer solution (10 mM of Tris-HCl, 1 mM of EDTA-Na2, pH8.0) to prepare the sample for electrophoresis. The internal standard marker is the internal standard marker used for DNA analysis (DNA-500 reagent kit for brand name MCE (registered trademark)-202 MultiNA (registered trademark) made by Shimadzu Corporation).

(Measurement order of data)

The microchip (product of Shimadzu Corporation, brand name Type WE), the separation medium for electrophoresis, the sample, and the internal standard marker are set on the microchip electrophoresis device (product of Shimadzu Corporation, brand name MCE (registered trademark)-202 MultiNA (registered trademark)). After that, the pressure for filling the separation medium for electrophoresis (100-500 kPa) and the voltage applied to the two ends of

9

the flow path arranged on the microchip (0.2-1.4 kV) are changed as necessary to conduct the electrophoresis automatically, and the obtained experimental data is analyzed.

(Comparison between separation medium for electrophoresis of the embodiment and a conventional separation medium for electrophoresis)

An experimental result is shown in FIG. 1 to FIG. 3 and Table 2, which is obtained by comparing the separation medium for electrophoresis of the embodiment (2.0% (w/v) HPMC (#2 in Table 1) + 3% (w/v) mannitol; practical example 1), and the separation medium for electrophoresis which is conventionally used (2.0% (w/v) hydroxyethyl cellulose (HEC), (weight-average molecular weight $M_w$=475000, polydispersity Mw/Mn=4.28, Brookfield viscosity is 90 cP (2 wt%, 25° C)); comparison example 1). In FIG. 2, 3 and Table 2, the notations of "A0308A", "W7613" refer to chip ID, the measurement is conducted in the same separation condition except for using different chips, and both are included in practical example 1. The object substance is a DNA size marker (to 500 bp) made by Invitrogen Corporation, and the internal standard marker is a marker on a high molecular side included in the DNA-500 reagent kit for MCE (registered trademark)-202 MultiNA (registered trademark).
When the electropherogram (FIG. 1) is compared, the viscosity of the separation medium for electrophoresis is equal in degree, but the electrophoresis time in practical example 1 is later than that in comparison example 1, and the interval between the peaks near 300 bp is expanded and the separation performance is improved. Furthermore, the size resolution (%) in the size area of 100-300 bp is about 4% in comparison example 1, but in practical example 1, the size resolution is improved to about 3% (FIG. 2). Besides, the separable size difference in the size area of 25-100 bp is 3-4 bp in comparison example 1, but in practical example 1, the separable size difference is improved to less than 3 bp (FIG. 3).

[Table 2]

Table2

|  |  | Practical example 1 | | Comparison example 1 |
| --- | --- | --- | --- | --- |
| Separation medium for electrophoresis | | 2.0% (w/v) HPMC (#2)+3% (w/v) mannitol | | 2.0% (w/v) HEC |
| Viscosity of separation medium for electrophoresis | | 98 cP | | 100 cP |
| Electrophoresis time (sec) | Chip ID | A0308A | W7613 | A0308A |
| | #2 (25 bp) | 38.48 | 38.32 | 35.56 |
| | #6 (125 bp) | 59.90 | 59.76 | 50.84 |
| | #11 (250 bp) | 75.28 | 75.28 | 64.98 |
| Degree of separation $R_s$ | 100 bp | 5.21 | 4.97 | 2.87 |
| Size resolution (%) $\triangle$bp/bp | 100-300 bp | About 3% | About 3% | About 4% |
| Separable size difference $\triangle$bp | 25-100 bp | Less than 3 bp | Less than 3 bp | 3-4 bp |

(Verification of improvement effect in separation performance by adding mannitol into HPMC)

An experimental result is shown in FIG. 4 and Table 3, which is obtained by comparing the separation medium for electrophoresis of the embodiment (2.0% (w/v) HPMC (#2 in Table 1)+1 wt% mannitol; practical example 2), and the separation medium for electrophoresis which is without mannitol (2.0% (w/v) HPMC (#2 in Table 1); comparison example 2). The object substance is the 25 bp step ladder (to 300 bp) made by Promega Corporation, and the internal standard marker is the marker on a high molecular side included in the DNA-500 reagent kit for MCE (registered trademark)-202 MultiNA (registered trademark). By adding 1 wt% mannitol, the electrophoresis time is delayed, and the interval between the peaks near 300 bp is expanded and the separation performance is improved.

[Table 3]

Table 3

|  |  | Practical example 2 | Comparison example 2 |
|---|---|---|---|
| Separation medium for electrophoresis |  | 2.0% (w/v) HPMC (#2)+1 wt% mannitol | 2.0% (w/v) HPMC (#2) |
| Viscosity of separation medium for electrophoresis |  | 98 cP | 98 cP |
| Electrophoresis time (sec) | #5 (100 bp) | 59.26 | 57.40 |
|  | #9 (200 bp) | 74.20 | 70.60 |
|  | #13 (300 bp) | 85.28 | 80.42 |
| Degree of separation $R_s$ | 100 bp | 5.97 | 4.71 |
| Size resolution (%) $\triangle$bp/bp | 200 bp | 2.81% | 3.79% |
| Separable size difference $\triangle$bp | 75 bp | 2.7 bp | 3.2 bp |

Next, an experimental result is shown in FIG. 5 and Table 4, which is obtained by comparing the separation medium for electrophoresis of the embodiment (2.0% (w/v) HPMC (#2 in Table 1)+3 wt% mannitol; practical example 3), and the separation medium for electrophoresis which is without mannitol (2.0% (w/v) HPMC (#2 in Table 1); comparison example 3). The object substance is the 25 bp step ladder (to 500 bp) made by Invitrogen Corporation, and the internal standard marker is the marker on a high molecular side included in the DNA-500 reagent kit for MCE (registered trademark)-202 MultiNA (registered trademark). By adding 3 wt% mannitol, the electrophoresis time is delayed, and the interval between the peaks near 300 bp is expanded and the separation performance is improved. Particularly the peak near 125 bp is separated into two peaks and the separation performance is improved greatly.

[Table 4]

Table 4

|  |  | Practical example 3 | Comparison example 3 |
|---|---|---|---|
| Separation medium for electrophoresis |  | 2.0% (w/v) HPMC (#2)+3 wt% mannitol | 2.0% (w/v) HPMC (#2) |
| Viscosity of separation medium for electrophoresis |  | 99 cP | 98 cP |
| Electrophoresis time (sec) | 100 bp | 55.74 | 44.12 |
|  | 300 bp | 80.14 | 60.90 |
|  | 500 bp | 95.10 | 70.64 |
| Degree of separation $R_s$ | 100 bp | 5.21 | 3.21 |
| Size resolution (%) $\triangle$bp/bp | 200 bp | 3.07% | 4.02% |
| Separable size difference $\triangle$bp | 100 bp | 2.99 bp | 4.18bp |

(Verification of improvement effect in separation performance by adding pullulan into HPMC)

An experimental result is shown in FIG. 6 and Table 5, which is obtained by comparing the separation medium for electrophoresis of the embodiment (2.0% (w/v) HPMC (#2 in Table 1) + 0.25 wt% pullulan; practical example 4), and the separation medium for electrophoresis which is without pullulan (2.0% (w/v) HPMC (#2 in Table 1); comparison example 4). The weight-average molecular weight of the pullulan used is 22800. The object substance is the 25 bp step ladder (to 500 bp) made by Invitrogen Corporation. The internal standard marker is the marker on a high molecular side included in the DNA-500 reagent kit for MCE (registered trademark)-202 MultiNA (registered trademark). By adding 0.25 wt% pullulan, an effect is confirmed that the electrophoresis time is delayed without expanding the peak width; for example, the degree of separation ($R_s$) at 200 bp is improved from 2.37 to 2.55.

[Table 5]

Table 5

|  |  | Practical example 4 | Comparison example 4 |
|---|---|---|---|
| Separation medium for electrophoresis | | 2.0% (w/v) HPMC (#2)+0.25 wt% pullulan | 2.0% (w/v) HPMC (#2) |
| Viscosity of separation medium for electrophoresis | | 108 cP | 98 cP |
| Electrophoresis time (sec) | 100 bp | 57.24 | 55.46 |
| | 300 bp | 80.14 | 78.02 |
| | 500 bp | 94.70 | 92.18 |
| Degree of separation $R_s$ | 200 bp | 2.55 | 2.37 |
| Size resolution (%) $\triangle$bp/bp | 200 bp | 4.02% | 4.02% |
| Separable size difference $\triangle$bp | 75 bp | 3.16 bp | 4.18 bp |

(Experimental data when HPMC with different weight-average molecular weight is used)

An experimental result is shown in FIG. 7 and Table 6, which is obtained by comparing the separation medium for electrophoresis of the embodiment (1.6% (w/v) HPMC (#1 in Table 1)+3 wt% mannitol; practical example 5), and the separation medium for electrophoresis which is without mannitol (1.6% (w/v) HPMC (#1 in Table 1); comparison example 5). The object substance is the 25 bp step ladder (to 300 bp) made by Promega Corporation. The internal standard marker is the marker on a high molecular side included in the DNA-500 reagent kit for MCE (registered trademark)-202 MultiNA (registered trademark). Even if HPMC having a small weight-average molecular weight is used, by adding 3 wt% mannitol, the electrophoresis time is delayed, and the interval between the peaks near 300 bp is expanded and the separation performance is improved on the whole (100 bp: $R_s=3.61\rightarrow4.71$, 200 bp: $R_s=1.84\rightarrow2.29$, 300 bp: $R_s=1.23\rightarrow1.50$).

[Table 6]

Table 6

|  |  | Practical example 5 | Comparison example 5 |
|---|---|---|---|
| Separation medium for electrophoresis | | 1.6% (w/v) HPMC (#1) + 3 wt% mannitol | 1.6% (w/v) HPMC (#1) |
| Viscosity of separation medium for electrophoresis | | 50 cP | 48 cP |
| Electrophoresis time (sec) | 100 bp | 58.14 | 44.88 |
| | 200 bp | 72.18 | 54.30 |
| | 300 bp | 82.62 | 61.14 |
| Degree of separation $R_s$ | 100 bp | 4.71 | 3.61 |
| | 200 bp | 2.29 | 1.84 |
| | 300 bp | 1.50 | 1.23 |
| Size resolution (%) $\triangle$bp/bp | 200 bp | 4.37% | 5.42% |

(continued)

|  | | Practical example 5 | Comparison example 5 |
|---|---|---|---|
| Separable size difference $\Delta$bp | 75 bp | 3.73 bp | 4.53 bp |

Next, an experimental result of 0.50% (w/v) HPMC (#3 in Table 1) solution (comparison example 6) serving as the separation medium for electrophoresis is shown in FIG. 8 and Table 7. The object substance is the 25 bp step ladder (to 300 bp) made by Promega Corporation. The internal standard marker is the marker on a high molecular side included in the DNA-500 reagent kit for MCE (registered trademark)-202 MultiNA (registered trademark). By diluting and using a high-molecular-weight HPMC, a separation with a short electrophoresis time is obtained, but even in this case, the delay effect of the electrophoresis time and the improvement in separation performance are suggested by adding mannitol.

[Table 7]

Table 7

| | | Comparison example 6 |
|---|---|---|
| Separation medium for electrophoresis | | 0.5% (w/v) HPMC (#3) |
| Viscosity of separation medium for electrophoresis | | 140 cP |
| Electrophoresis time (sec) | 100 bp | 33.22 |
| | 200 bp | 38.50 |
| | 300 bp | 43.10 |
| Degree of separation $R_s$ | 100 bp | 2.63 |
| Size resolution (%) $\Delta$bp/bp | 200 bp | 3.88% |
| Separable size difference $\Delta$bp | 75 bp | 8.09 bp |

The embodiments and practical examples of the disclosure are described as above, but it has been intended from the beginning that structures of the embodiments and practical examples are appropriately combined.
It should be considered that the embodiments and practical examples disclosed here are illustrations instead of limitations.

## Claims

1.   A separation medium for electrophoresis within a surface-coated flow path, the separation medium comprising:

hydroxypropylmethyl cellulose; and
a sugar alcohol derived from monosaccharide or disaccharide, or a low-molecular-weight polysaccharide with a molecular weight of 80000 or less.

2.   The separation medium for electrophoresis according to claim 1, wherein the sugar alcohol is selected from mannitol, erythritol, xylitol, lactitol, maltitol and sorbitol, or a combination thereof.

3.   The separation medium for electrophoresis according to claim 1 or 2, wherein the concentration of the sugar alcohol in the separation medium is 1-5% (w/v).

4.   The separation medium for electrophoresis according to any one of claims 1 to 3, wherein a weight-average molecular weight of the polysaccharide is 10000-80000.

5.   The separation medium for electrophoresis according to any one of claims 1 to 4, wherein the polysaccharide comprises pullulan, agarose, dextran, dextrin, amylose, xanthan gum, mannan, galactomannan, gellan gum, carrageenan, curdlan, pectine, welan gum, alginic acid, alginic acid salt, alginic acid ester, karaya gum, tamarind seed gum, rhamsan gum, or a combination thereof.

6. The separation medium for electrophoresis according to any one of claims 1 to 5, wherein the concentration of the polysaccharide in the separation medium is 0.2-5 wt%.

7. The separation medium for electrophoresis according to any one of claims 1 to 6, wherein the sugar alcohol or the polysaccharide comprises mannitol, pullulan, or a combination thereof.

8. A reagent kit for electrophoresis comprising the separation medium for electrophoresis according to any one of claims 1 to 7.

9. An electrophoresis method which is the electrophoresis method of an object substance in a sample, comprising:

(A) a process for introducing the sample to a flow path filled with the separation medium for electrophoresis according to any one of claims 1 to 7; and
(B) a process for applying a voltage to the flow path to conduct an electrophoresis and separate the object substance in the sample.

10. The electrophoresis method according to claim 9, wherein the object substance comprises nucleic acid or protein.

**Patentansprüche**

1. Trennmedium für Elektrophorese innerhalb eines oberflächenbeschichteten Strömungspfads, wobei das Trennmedium Folgendes umfasst:

Hydroxypropylmethylcellulose; und
einen Zuckeralkohol, abgeleitet von Monosaccharid oder Disaccharid oder einem Polysaccharid mit niedrigem Molekulargewicht mit einem Molekulargewicht von 80.000 oder weniger.

2. Trennmedium für Elektrophorese nach Anspruch 1, wobei der Zuckeralkohol aus Mannit, Erythrit, Xylit, Lactit, Maltit und Sorbit oder einer Kombination daraus ausgewählt ist.

3. Trennmedium für Elektrophorese nach Anspruch 1 oder 2, wobei die Konzentration des Zuckeralkohols in dem Trennmedium 1 bis 5 % (Gew./Vol.) beträgt.

4. Trennmedium für Elektrophorese nach einem der Ansprüche 1 bis 3, wobei ein gewichtsmittleres Molekulargewicht des Polysaccharids 10.000 bis 80.000 beträgt.

5. Trennmedium für Elektrophorese nach einem der Ansprüche 1 bis 4, wobei das Polysaccharid Pullulan, Agarose, Dextran, Dextrin, Amylose, Xanthan-Gummi, Mannan, Galactomannan, Gellan-Gummi, Carrageenan, Curdlan, Pectin, Welan-Gummi, Alginsäure, Alginsäuresalz, Alginsäureester, Karaya-Gummi, Tamarindensaat-Gummi, Rhamsan-Gummi oder eine Kombination daraus umfasst.

6. Trennmedium für Elektrophorese nach einem der Ansprüche 1 bis 5, wobei die Konzentration des Polysaccharids in dem Trennmedium 0,2 bis 5 Gew.-% beträgt.

7. Trennmedium für Elektrophorese nach einem der Ansprüche 1 bis 6, wobei der Zuckeralkohol oder das Polysaccharid Mannit, Pullulan oder eine Kombination daraus umfasst.

8. Reagensset für Elektrophorese, umfassend ein Trennmedium für Elektrophorese nach einem der Ansprüche 1 bis 7.

9. Elektrophoreseverfahren, das das Elektrophoreseverfahren einer gegenständlichen Substanz in einer Probe ist, umfassend:

(A) einen Prozess zum Einführen der Probe in einen Strömungspfad, der mit einem Trennmedium für Elektrophorese nach einem der Ansprüche 1 bis 7 gefüllt ist; und
(B) einen Prozess zum Anlegen einer Spannung an den Strömungspfad, um eine Elektrophorese durchzuführen und die gegenständliche Substanz in der Probe abzutrennen.

**10.** Elektrophoreseverfahren nach Anspruch 9, wobei die gegenständliche Substanz Nucleinsäure oder Protein umfasst.

## Revendications

**1.** Milieu de séparation pour électrophorèse à l'intérieur d'un trajet d'écoulement revêtu en surface, le milieu de séparation comprenant :

de l'hydroxypropylméthylcellulose ; et
un alcool de sucre dérivé d'un monosaccharide ou d'un disaccharide, ou un polysaccharide à faible poids moléculaire ayant un poids moléculaire de 80 000 ou moins.

**2.** Milieu de séparation pour électrophorèse selon la revendication 1, dans lequel l'alcool de sucre est choisi parmi le mannitol, l'érythritol, le xylitol, le lactitol, le maltitol et le sorbitol, ou une combinaison de ceux-ci.

**3.** Milieu de séparation pour électrophorèse selon la revendication 1 ou 2, dans lequel la concentration de l'alcool de sucre dans le milieu de séparation est de 1 à 5 % (p/v).

**4.** Milieu de séparation pour électrophorèse selon l'une quelconque des revendications 1 à 3, dans lequel un poids moléculaire moyen en poids du polysaccharide est de 10 000 à 80 000.

**5.** Milieu de séparation pour électrophorèse selon l'une quelconque des revendications 1 à 4, dans lequel le polysaccharide comprend du pullulane, de l'agarose, du dextrane, de la dextrine, de l'amylose, de la gomme de xanthane, du mannane, du galactomannane, de la gomme de gellane, de la carraghénine, du curdlan, de la pectine, de la gomme de welane, de l'acide alginique, un sel d'acide alginique, un ester d'acide alginique, de la gomme de karaya, de la gomme de graines de tamarin, de la gomme de rhamsane, ou une combinaison de ceux-ci.

**6.** Milieu de séparation pour électrophorèse selon l'une quelconque des revendications 1 à 5, dans lequel la concentration du polysaccharide dans le milieu de séparation est de 0,2 à 5 % en poids.

**7.** Milieu de séparation pour électrophorèse selon l'une quelconque des revendications 1 à 6, dans lequel l'alcool de sucre ou le polysaccharide comprend du mannitol, du pullulane, ou une combinaison de ceux-ci.

**8.** Kit de réactif pour électrophorèse comprenant le milieu de séparation pour électrophorèse selon l'une quelconque des revendications 1 à 7.

**9.** Procédé d'électrophorèse qui est le procédé d'électrophorèse d'une substance objet dans un échantillon, comprenant :

(A) un processus pour introduire l'échantillon dans un trajet d'écoulement rempli du milieu de séparation pour électrophorèse selon l'une quelconque des revendications 1 à 7 ; et
(B) un processus pour appliquer une tension au trajet d'écoulement afin d'effectuer une électrophorèse et de séparer la substance objet dans l'échantillon.

**10.** Procédé d'électrophorèse selon la revendication 9, dans lequel la substance objet comprend un acide nucléique ou une protéine.

FIG. 1

FIG. 2

FIG. 3

FIG. 4

FIG. 5

FIG. 6

FIG. 7

FIG. 8

**EP 3 462 169 B1**

## REFERENCES CITED IN THE DESCRIPTION

**Patent documents cited in the description**

- JP 2014055829 A
- US 20130001084 A
- US 20100187113 A

**Non-patent literature cited in the description**

- **PERLMAN, D. et al.** *Analytical Biochemistry,* 1987, vol. 163, 247-254
- **MIKŠÍK, I. et al.** *Biomedical Chromatography,* 2006, vol. 20, 458-465